# EUROPEAN PATENT APPLICATION

(11) **EP 3 949 748 A1**
(43) Date of publication of application: **09.02.2022**
(21) Application number: 19922959.2
(22) Date of filing: 01.04.2019
(51) Int. Cl.: A23K 20/10, A23K 50/75, A23K 20/158, A23K 20/174

(54) **SUPPLEMENT FOR USE IN ANIMAL FEEDING**

(71) Applicant: LIPIDOS TOLEDO, S.A., 28037 Madrid (ES)
(72) Inventor: MARTINEZ SANCHEZ, Antonio, 28037 MADRID (ES); DIAZ CASTAÑEDA, Maria, 28037 MADRID (ES)
(74) Representative: De Pablos Riba, Juan Ramon
(86) International application number: PCT/ES2019/070217
(87) International publication number: WO 2020/201586

(57) **Abstract**

Supplement for use in animal feed, which consists of a composition intended for animal feed that allows the digestibility of dietary fat to be improved and same to be used at the metabolic level without overloading the hepatic system, comprising a combination of 0.5-5.5% by weight botanicals, 3.0-18.0% by weight vitamins and provitamins, 12.0-25.0% by weight lecithins, 3.0-10.0% by weight sorbitan esters, and 45.0-65.0% antioxidant and adsorbent excipient.

## Description

### OBJECT OF THE INVENTION

The present invention relates to a supplement for use in animal feed in order to improve the hepatic metabolism of fats added to animal feed.

More particularly, the object of the present invention is focused on the development of a composition intended for animal feed that allows the digestibility of dietary fat to be improved and the same to be used at the metabolic level without overloading the hepatic system.

The invention essentially consists of a combination of hepatoprotective botanicals, vitamins and provitamins with liver function, lecithins and sorbitan esters.

### FIELD OF APPLICATION

The field of application of the present invention is in the field of animal feed, with a particular focus on the area of feed manufacturing.

### BACKGROUND OF THE INVENTION

The current demand for improvements in productive rates in species intended for production (poultry, pig and aquaculture sectors) implies very high requirements for metabolisable energy in the diet, which can only be met by the supply of fat, as there is no other raw material that contains the energy required by animals for their growth. Therefore, improving the energy efficiency of fats is of great interest from an economic point of view.

Since the 1930s, lecithins, mainly from the soybean oil refining industry, have been used for their fat emulsifying power, and nowadays synthetic emulsifiers (such as glyceryl polyethylene glycol ricinoleate and monoglycerides) and/or natural emulsifiers (such as lysophospholipids) are used to improve the digestibility and absorption of fats and oils at intestinal level.

Mycotoxins, diseases and other factors favour the deterioration of liver function, so the fact that the liver does not function at optimal performance is very common in animal farms. If we add to this a higher fat digestibility that increases the amount of fat that reaches the liver of the animals, the functional capacity of the liver can be exceeded, initiating the process of fat storage inside the hepatocytes and altering their structure and metabolic capacity. If the challenge disappears, we can recover a fatty liver towards a normal, fully functional liver; if not, it will eventually develop into cirrhosis, which will be irreversible.

The use of hepatoprotective substances in the diet of animals will prevent hepatic activity from being compromised, protecting the organ from the challenges it will face and increasing its clearance capacity in different stress situations, leading to improvements in health, growth and production.

There are currently two types of hepatic protectors: those of botanical origin which are formed by combining a variable number of plants with different hepatoprotective properties, and methyl-group donors, among which certain amino acids and their derivatives (e.g. carnitine, betaine, etc.) and vitamin derivatives (e.g. choline) stand out.

The present invention combines liver function enhancers and emulsifiers to achieve an improvement in energy metabolism, combining the emulsifying functionality with that of liver protection and promoting pancreatic, biliary and intestinal secretion, control of liver overload, stimulation of proper fat movement and utilization, improved contact between intestinal substrate and digestive enzymes, and increased liver clearance capacity.

### DESCRIPTION OF THE INVENTION

The invention is a supplement for use in animal feed, constituting a composition for addition to animal feed in order to improve energy metabolism and reduce energy consumption, which consists of a combination of hepatoprotective botanicals, vitamins and provitamins with liver function, lecithins as a source of natural inositol and choline, and sorbitan esters.

Botanicals are present in a percentage between 0.5% and 5.5% by weight and are chosen from one or more of the group comprising boldo (*Peumus boldus*), artichoke (*Cynara scolymus*), turmeric (*Curcuma longa*), liquorice (*Glycyrrhiza glabra*), andrographis (*Andrographis paniculata*), milk thistle (*Sylibum marianum*), dandelion (*Taraxacum officinale*) and/or extracts thereof; vitamins and provitamins are chosen from one or more of betaine, choline, methionine, inositol and carnitine and/or their salts and are present between 3.0% and 18.0% by weight; lecithins comprise a mixture of lecithins and hydrolysed soybean and/or sunflower lecithins and are present between 12.0% and 25.0% by weight; sorbitan esters may be monolaurate and/or monooleate and are present between 3.0% and 10.0% by weight; the adsorbent and antioxidant excipient comprises a mixture of silicon dioxide and/or silicic acid, sepiolite and/or sepiolite clay, butylated hydroxytoluene and citric acid and is present between 45.0% and 65.0%.

The invention described in the previous paragraph combines three actions:
It increases intestinal fat absorption through the synergistic action of lecithins and sorbitan esters.

It facilitates the transport of fats to the liver through the action of phospholipids present in lecithins.

It improves the integrity and regeneration of hepatocytes, optimising the liver's detoxification capacity, and promotes hepatic synthesis by stimulating the activity of digestive enzymes which ensure an optimal nutrient utilisation, thanks to the action of botanicals, vitamins and provitamins, and the natural choline and inositol contained in lecithins.

### BRIEF DESCRIPTION OF THE DRAWINGS

In order to clarify the terms of the present invention, reference is made to the figures in which:
Figure 1.1 - depicts a diagram of the evolution of the Conversion Rate (CR) (kg/kg) throughout the trial in laying hens according to treatment.
Figure 2.2 - depicts a diagram of the treatment effect on feed Conversion Rate (CR) throughout the study in broiler chickens.
Figure 3.3 - depicts a diagram of the treatment effect on average daily weight gain (ADG) throughout the study.
Figure 4.4 - depicts a diagram of an anatomopathological study of livers before (A: 69-week-old hens) and after the use of the invention for 11 weeks (B: 80-week-old hens).

### Examples of compositions of the invention:

The following are three exemplary embodiments of compositions according to the invention which have been shown to be particularly advantageous for use in animal feed.

### Example 1

In a first exemplary embodiment, the composition corresponds to the qualitative and quantitative formula given below. The weights of each respective component are for a total composition weight of 1 kg of composition:

| | | |
|---|---|---|
| Hydrolysed lecithin | 200.00 | g |
| Liquid lecithin | 20.00 | g |
| Betaine | 25.00 | g |
| Choline Chloride | 50.00 | g |
| Carnitine Tartrate | 10.00 | g |
| Artichoke extract | 10.00 | g |
| Milk Thistle powder | 5.00 | g |
| Boldo extract | 2.00 | g |
| Sorbitan monooleate | 60.00 | g |
| Citric acid anhydrous | 10.00 | g |
| BHT | 1.00 | g |
| Silicon dioxide | 350.00 | g |
| Sepiolite | 257.00 | g |
| | 1000.00 | g |

For the preparation of the composition of this exemplary embodiment, each of the solid ingredients is weighed and introduced into a mixer provided with agitation, independent liquid inlet and heating mantle. Once all the solid ingredients have been introduced, the stirring is started and the mixture is heated to 45°C. Once this temperature is reached, the liquid mixture, previously heated to 40°C, is slowly added. Once all the liquid mixture has been added, the heating is stopped, the stirring continues for another three minutes and then the mixture is repacked.

### Example 2

In this exemplary embodiment, the various components included in the composition according to the invention intervene according to the respective amounts indicated below, for a total composition amount of 1 kg:

| | | |
|---|---|---|
| Hydrolysed lecithin | 180.00 | g |
| Liquid lecithin | 50.00 | g |
| Inositol | 30.00 | g |
| Choline Chloride | 40.00 | g |
| Carnitine Tartrate | 10.00 | g |
| Artichoke extract | 10.00 | g |
| Milk Thistle extract | 4.00 | g |
| Turmeric extract | 4.00 | g |
| Sorbitan monolaurate | 75.00 | g |
| Citric acid anhydrous | 10.00 | g |
| BHT | 1.00 | g |
| Silicic acid | 375.00 | g |
| Sepiolite | 211.00 | g |
| | 1000.00 | g |

For the preparation of the composition of this exemplary embodiment, each of the solid ingredients is weighed and introduced into a mixer provided with agitation, independent liquid inlet and heating mantle. Once all the solid ingredients have been introduced, the stirring is started and the mixture is heated to 45°C. Once this temperature is reached, the liquid mixture, previously heated to 40°C, is slowly added. Once all the liquid mixture has been added, the heating is stopped, the stirring continues for another three minutes and then the mixture is repacked.

### Example 3

In this other exemplary embodiment, the components included in the composition according to the invention intervene in the respective quantities indicated below for 1 kg of composition:

| | | |
|---|---|---|
| Hydrolysed lecithin | 200.00 | g |
| Liquid lecithin | 40.00 | g |
| Betaine | 20.00 | g |
| Choline Chloride | 60.00 | g |
| Inositol | 15.00 | g |
| Artichoke extract | 5.00 | g |
| Milk Thistle extract | 15.00 | g |
| Dandelion powder | 5.00 | g |
| Sorbitan monolaurate | 50.00 | g |
| Citric acid anhydrous | 10.00 | g |
| BHT | 1.00 | g |
| Silicic acid | 400.00 | g |
| Sepiolite clay | 179.00 | g |
| | 1000.00 | g |

For the preparation of the composition of this exemplary embodiment, each of the solid ingredients is weighed and introduced into a mixer provided with agitation, independent liquid inlet and heating mantle. Once all the solid ingredients have been introduced, the stirring is started and the mixture is heated to 45°C. Once this temperature is reached, the liquid mixture, previously heated to 40°C, is slowly added. Once all the liquid mixture has been added, the heating is stopped, the stirring continues for another three minutes and then the mixture is repacked.

The different tests carried out have demonstrated the efficacy of use of the invention in improving the feed energy metabolism, as the results obtained suggest that the invention can be used to improve the use of the fats added to the feed, and therefore reduce the percentage of added fats and the cost of the feed.

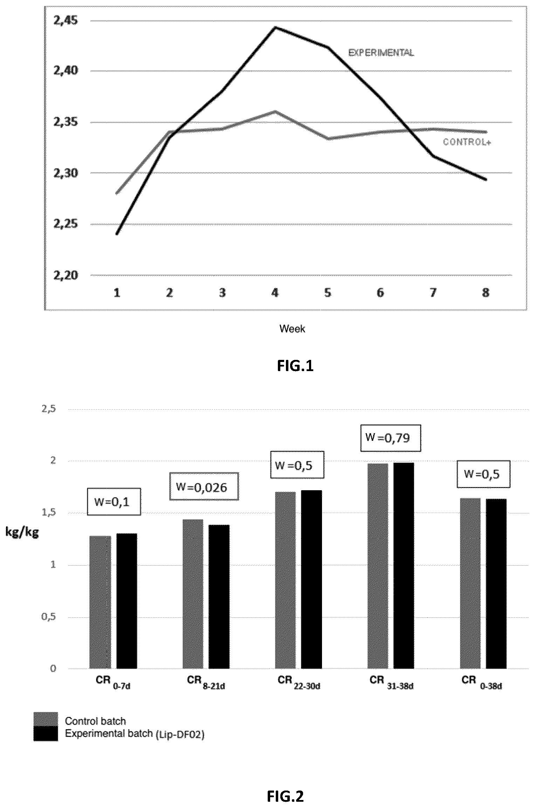

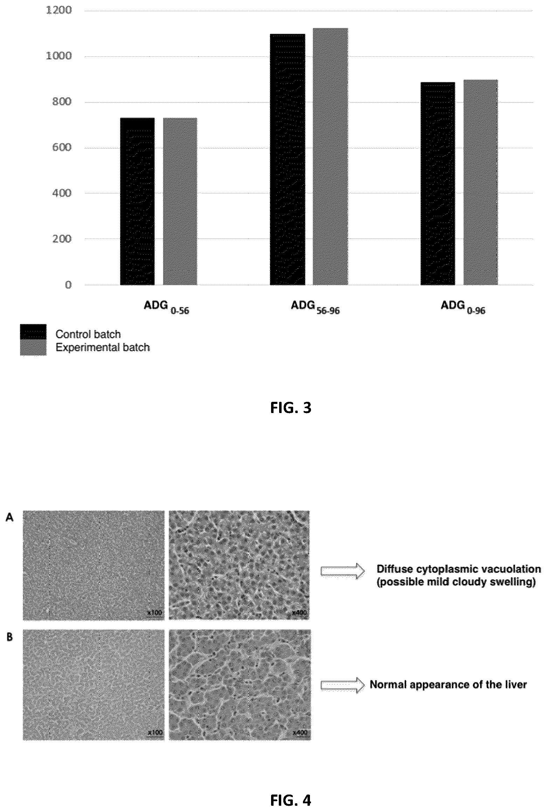

The following tables show, by way of example, some of the results obtained. In these tables, Lip-DF02 and Lip-DF03 correspond to codifications of the invention for the research trials, and their compositions fall, in both cases, within the ranges stated in the description of the invention. Figures 1.1, 2.2 and 3.3, for their part, graphically represent the results of the same trials and figure 4.4 shows the histological differences found in the livers after the use of the invention in laying hens.

**Table 1. Experimental trial with laying hens**

| *Treatments applied* | | | | | | | |
|---|---|---|---|---|---|---|---|
| **TREATMENT** | **SOYBEAN OIL (kg/t)** | **Lip-DF02 (kg/t)** | **ADDITIONAL WHEAT (kg/t)** | **TOTAL WHEAT (kg/t)** | **M. E. LAYING HENS (Mcal/kg)** | **CRUDE PROTEIN (%)** | **CRUDE FAT (%)** |
| **1 CONTROL+** | 28.0 | - | - | 311.61 | 2,760 | 17.1 | 4.44 |
| **2 EXPERIMENTAL** | 23.0 | 0.5 | 4.5 | 316.11 | 2,767 | 17.12 | 3.96 |

| *Conversion Rate (kg*/*kg) according to treatment* | | | | | | | |
|---|---|---|---|---|---|---|---|
| | | | | | **n** | **CR** | |
| **1 CONTROL +** | | | | | 64 | 2.34 | |
| **2 EXPERIMENTAL** | | | | | 64 | 2.35 | |
| *Feed cost differential between treatments* | | | | | | | |

| **INGREDIENT** | **PRICE** | | **CONTROL** | | **EXPERIMENTAL** | | |
|---|---|---|---|---|---|---|---|
| | **(€/t)** | | **kg/t** | **Cost €/t** | **kg/t** | **Cost €/t** | |
| Wheat | 184 | | 311 | 57.224 | 315.5 | 58.05 | |
| Soybean oil | 694 | | 28 | 19.432 | 23 | 15.96 | |
| Lip-DF02 | 2600 | | | | 0.5 | 1.30 | |
| Cost €/t | | | | 76.656 | | 75.314 | |
| Differential (€/t) | | | | | | **-1.342** | |

**Table 2. Experimental trial in broiler chicken fattening**

| *Diets used in the study* | | | | | | | | | | | | | | |
|---|---|---|---|---|---|---|---|---|---|---|---|---|---|---|
| **DIET** | | | **CONTROL BATCH (T1)** | | | **EXPERIMENTAL BATCH (T2)** | | | | | | | | |
| | | | **SOYBEAN OIL (kg/t feed)** | **FAT (kg/t feed)** | **Lip-DF02 (kg/t feed)** | **SOYBEAN OIL (kg/t feed)** | **FAT (kg/t feed)** | **Lip-DF02 (kg/t feed)** | **ADDITIONAL CHOPPED CORN (kg/t feed)** | | | | | |
| | | **G30(1-7 days)** | 41.6 | 0 | 0 | 41.6 | 0 | 0 | 0 | | | | | |
| | | **G31(8-21 days)** | 27.3 | 15.1 | 0 | 27.3 | 5.1 | 1 | 9 | | | | | |
| | | **G432(22-30 days)** | 0 | 46.3 | 0 | 0 | 36.3 | 1 | 9 | | | | | |
| | | **G300 (31-38 days)** | 0 | 46.5 | 0 | 0 | 36.5 | 1 | 9 | | | | | |

| *Treatment effect on feed CR* | | | | | | | | | | | | | | |
|---|---|---|---|---|---|---|---|---|---|---|---|---|---|---|
| **TREATMENT** | | | | **n** | **CR (0-7 d)** | | **CR (8-21 d)** | | **CR (22-30 d)** | | **CR (31-38 d)** | | **CR (0-38 d)** | |
| **CONTROL (T1)** | | | | 12 | 1.27 | | 1.43 | | 1.70 | | 1.97 | | 1.64 | |
| **EXPERIMENTAL (T2)** | | | | 12 | 1.30 | | 1.38 | | 1.71 | | 1.98 | | 1.63 | |

| *Feed cost differential between treatments* | | | | | | | | | | | | | | |
|---|---|---|---|---|---|---|---|---|---|---|---|---|---|---|
| **INGRE DIENT** | **Price (€/t)** | **FEED 8-21 d** | | | | | **FEED 22-30** d | | | | **FEED** 31-38 d | | | |
| | | **CONTROL** | | **EXPERIMENTAL** | | | **CONTROL** | | **EXPERIMENTAL** | | **CONTROL** | | **EXPERIMENTAL** | |
| | | **kg/t** | **Cost (€/t)** | **kg/t** | | **Cost (€/t)** | **kg/t** | **Cost (€/t)** | **kg/t** | **Cost (€/t)** | **kg/t** | **Cost (€/t)** | **kg/t** | **Cost (€/t)** |
| **Fat** | 750 | 15 | 11.325 | 5.1 | | 3.825 | 46 | 34.725 | 36 | 27.225 | 47 | 34.875 | 37 | 27.375 |
| **Corn** | 180 | | | 9 | | 1.620 | | | 9 | 1.620 | | | 9 | 1.620 |
| **Lip-DF02** | 2.6 €/kg | | | 1 | | 2.600 | | | 1 | 2.600 | | | 1 | 2.600 |
| **TOTAL** | | 11.325 | | 8.045 | | | 34.725 | | 31.445 | | 34.875 | | 31.595 | |
| **DIFFERENTIAL (€/t)** | | | | | **- 3.280** | | | | **- 3.280** | | | | **3.280** | |

**Table 3. Experimental trial in fattening pigs**

| *Diets used in the study* | | | | | | | | | |
|---|---|---|---|---|---|---|---|---|---|
| **DIET** | **CONTROL BATCH** | | | | **EXPERIMENTAL BATCH** | | | | |
| | **FAT (kg/t feed)** | | **Lip-DF03 (kg/t** | **feed)** | **FAT (kg/t feed)** | **Lip-DF03 (kg/t** | **feed)** | **(kg/t** | **ADDITIONAL BARLEY feed)** |
| **G-237 (FIRST STAGE OF FATTENING)** | 15.7 | | 0 | | 10.0 | 0.4 | | | 5.3 |
| **G-557 (GROWING STAGE)** | 20.4 | | 0 | | 12.4 | 0.7 | | | 7.3 |
| **G-556 (FATTENING STAGE)** | 20.2 | | 0 | | 15.0 | 0.4 | | | 4.8 |

| *Treatment effect on growth variables* | | | | | | | | | |
|---|---|---|---|---|---|---|---|---|---|
| | **n** | **W₀ kg** | | **W₅₆ kg** | **W₉₆ kg** | **ADG₀₋₅₆ g** | **ADG₅₆₋₉₆ g** | | **ADG₀₋₉₆ g** |
| **Treatment** | | | | | | | | | |
| Control | 60 | 22.01 | | 62.75 | 106.71 | 727.21 | 1099.02 | | 882.13 |
| Experimental | 62 | 22.16 | | 62.83 | **107.90** | 728.70 | **1126.54** | | **894.60** |

| | | | | | | | | | |
|---|---|---|---|---|---|---|---|---|---|
| n = No. of pigs, W₀ = initial weight, W₅₆ = weight at 56 days, W₉₆ = weight at 96 days (slaughter), ADG₀₋₅₆ = average daily weight gain from the start of the experiment to 56 days, ADG₅₆₋₉₆ = average daily weight gain between days 56-96, ADG₀₋₉₆ = average daily weight gain from the start to the end (slaughter) of the experiment. | | | | | | | | | |

### Treatment effect on conversion rate

| **Treatment** | **CR₀₋₅₆ Kg/kg** | **CR₅₆₋₉₆ Kg/kg** | **CR₀₋₉₆ Kg/kg** |
|---|---|---|---|
| Control | 2.050 | 2.296 | 2.180 |
| Experimental | 2.000 | 2.302 | 2.170 |

| | | | |
|---|---|---|---|
| CR₀₋₅₆ = feed conversion rate between days 0-56, CR₅₆₋₉₆ = feed conversion rate between days 56-96, CR₀₋₉₆ = feed conversion rate from the start to the end (slaughter) of the experiment. | | | |

### Influence of treatment on carcass characteristics

| | **n** | **Carcass weight without hands kg** | **Carcass weight kg** | **Carcass Yield %** | **Muscle %** | **Classification (scale 1-7)** |
|---|---|---|---|---|---|---|
| **Treatment** | | | | | | |
| Control | 59 | 81.03 | 81.87 | 76.42 | **61.47** | **4.25** |
| Experimental | 62 | 81.22 | 82.06 | 75.84 | **62.27** | **5.11** |

| | | | | | | |
|---|---|---|---|---|---|---|
| n = No. of carcass. Scale 1-7 from lowest to highest carcass quality. | | | | | | |

## Claims

1. A supplement for use in animal feed, which consists of a composition for addition to animal feed that allows the digestibility of dietary fat to be improved and same to be used at the metabolic level without overloading the hepatic system, **characterized in that** it comprises a combination of 0.5-5.5% by weight botanicals, 3.0-18.0% by weight vitamins and provitamins, 12.0-25.0% by weight lecithins, 3.0-10.0% by weight sorbitan esters, and 45.0-65.0% antioxidant and adsorbent excipient.

2. The supplement for use in animal feed as claimed in claim 1, **characterized in that** the combination of botanicals is chosen from one or more of the group comprising boldo (*Peumus boldus),* artichoke (*Cynara scolymus),* liquorice *(Glycyrrhiza glabra),* andrographis *(Andrographis paniculata),* turmeric *(Curcuma longa),* milk thistle *(Sylibum Marianum),* dandelion (*Taraxacum officinale)* and/or extracts thereof.

3. The supplement for use in animal feed as claimed in claim 1, **characterized in that** the vitamins and provitamins are chosen from one or more of betaine, choline, methionine, inositol and carnitine and/or their salts.

4. The supplement for use in animal feed as claimed in claim 1, **characterized in that** the lecithins comprise a mixture of lecithins and hydrolysed soybean and/or sunflower lecithins.

5. The supplement for use in animal feed as claimed in claim 1, **characterized in that** the sorbitan esters may be monolaurate and/or monooleate.

6. The supplement for use in animal feed as claimed in claim 1, **characterized in that** the adsorbent and antioxidant excipient comprises a mixture of silicon dioxide and/or silicic acid, sepiolite and/or sepiolite clay, butylated hydroxytoluene and citric acid.

7. The supplement for use in animal feed as claimed in claims 1 to 6, **characterized in that** it is added to animal feed in a ratio between 250 grams and 2000 grams per tonne of feed.
